# EUROPEAN PATENT SPECIFICATION

(11) **EP 4 196 859 B1**
(45) Date of publication and mention of the grant of the patent: **29.04.2026**
(21) Application number: 21856743.6
(22) Date of filing: 12.08.2021
(51) Int. Cl.: G05D 1/246, G05D 1/85, G01M 17/007, B60W 60/00, G05D 105/22, G05D 107/13, G05D 109/10

(54) **AUTONOMOUS SAFETY RIDER**
AUTONOMER SICHERHEITSFAHRER
CONDUCTEUR DE SÉCURITÉ AUTONOME

(30) Priority: 12.08.2020 US 202063064896 P
(43) Date of publication of application: 21.06.2023
(73) Proprietor: Autonomous Solutions, Inc., Mendon, Utah 84325 (US)
(72) Inventor: STEWART, Brian, Mendon, UT 84325 (US); LEWIS, Paul, Mendon, UT 84325 (US); HILL, Ben, Mendon, UT 84325 (US); HOLLINGSHEAD, Dave, Mendon, UT 84325 (US); GARDNER, Sean, Mendon, UT 84325 (US); PETERSON, John, Mendon, UT 84325 (US); WOICESHYN, Kasper, Mendon, UT 84325 (US); JEPPESEN, Chad, Mendon, UT 84325 (US); BUDD, Eric, Mendon, UT 84325 (US)
(74) Representative: Haseltine Lake Kempner LLP
(86) International application number: PCT/US2021/045803
(87) International publication number: WO 2022/036139

(56) References cited:
- US-A1- 2010 194 593
- US-A1- 2017 102 700
- US-A1- 2017 269 593
- US-A1- 2018 050 704
- US-A1- 2018 373 263
- US-A1- 2020 017 114
- US-A1- 2020 017 114
- US-B2- 10 379 007

## Description

### BACKGROUND

Automobiles are being developed that are autonomous or semiautonomous that will ultimately replace human drivers. To ensure autonomous or semi-autonomous vehicles meet requisite safety standards, these vehicles must be tested in various environments.

US 2018/0050704 describes an on-board diagnostic system for an autonomous vehicle that can received diagnostic data from autonomous vehicle system to determine whether the system is operating normally. On detection of a fault condition in the a vehicle system, a procedure is initiated to resolve the fault condition.

### SUMMARY

The scope of the claimed invention is defined by the appended claims.

System and methods are disclosed that provide an autonomous safety rider system for an autonomous vehicle. The autonomous safety rider system, for example, may allow the autonomous vehicle to undergo various on road tests without having a human safety rider. The autonomous safety rider system may be able to control the brakes, throttle, and/or steering of the autonomous vehicle such as, for example, via a drive by wire (or CAN) interface or via one or more physical actuators that physically engage with the brakes, throttle, and/or steering.

Some embodiments include a method comprising: receiving a map from a vehicle automation platform, the map providing one or more paths for an autonomous vehicle to follow; receiving safety parameters for the autonomous vehicle for one or more positions within the map; monitoring the sensors; and in the event the autonomous vehicle is operating outside the safety parameters, sending an operational signal to the autonomous vehicle to engage the brakes, turn the steering, and/or engage the throttle.

In some embodiments, the sensors are sensors on the autonomous vehicle. In some embodiments, the autonomous vehicle comprises a semi-autonomous vehicle. In some embodiments, the operational signal is transmitted to the autonomous vehicle's CAN system. d/or steering.

Some embodiments may include a method comprising: receiving a map from a vehicle automation platform, the map providing one or more paths for an autonomous vehicle to follow; receiving safety parameters for the autonomous vehicle for one or more positions within the map; monitoring the sensors; and in the event the autonomous vehicle is operating outside the safety parameters, engaging one or more actuators engage the brakes, turn the steering, and/or adjust the throttle.

In some embodiments, the sensors are sensors on the autonomous vehicle. In some embodiments, the autonomous vehicle comprises a semi-autonomous vehicle.

Some embodiments include a system comprising: one or more actuators; a communication interface; a sensor interface; a controller coupled with the one or more actuators, the communication interface, and the sensor interface. In some embodiments, the controller may receive a map from a vehicle automation platform via the communication interface, the map providing one or more paths for an autonomous vehicle to follow; receive safety parameters for the autonomous vehicle for one or more positions within the map via the communication interface; monitor sensors via the sensor interface; and in the event the autonomous vehicle is operating outside the safety parameters, sends a signal to the one or more actuators engage the brakes, turn the steering, and/or adjust the throttle.

In some embodiments, the one or more actuators are configured to be coupled with a brake system, a throttle system, or a steering system of an autonomous vehicle. In some embodiments, the sensor interface is coupled with the autonomous vehicle. In some embodiments, the sensor interface is coupled with a GPS sensor.

Some embodiments include a method comprising: receiving at an automated driving system a path from a vehicle automation platform, wherein the automated driving system is separate and distinct from the autonomous vehicle; operating the autonomous vehicle along the path using the automated driving system; receiving at the automated driving system a request to transition the autonomous vehicle in auto pilot mode with autonomous safety rider system; sending from the automated driving system a signal to the autonomous vehicle to transition into autopilot mode; engaging the automated driving system into autonomous safety rider system mode; and monitoring the autonomous vehicle to ensure that it remains within safety parameters. In some embodiments, the monitoring the autonomous vehicle to ensure that it remains within safety parameters occurs at autonomous safety rider system that is distinct from the automated driving system and/or the autonomous vehicle.

The various embodiments described in the summary and this document are provided not to limit or define the disclosure or the scope of the claims.

### BRIEF DESCRIPTION OF THE FIGURES

FIG. 1 is a block diagram of an automated autonomous vehicle test system hardware according to some embodiments.
FIG. 2 is a block diagram of an automated autonomous vehicle test system hardware according to some embodiments.
FIG. 3 is flowchart representing a process for using an autonomous safety rider system according to some embodiments.
FIG. 4 is an illustration of an autonomous vehicle path according to some embodiments.
FIG. 5 is flowchart representing a process for using an autonomous safety rider system according to some embodiments.
FIG. 6 is a block diagram of a computational system that can be used to with or to perform some embodiments described in this document.

### DETAILED DESCRIPTION

Many major vehicle OEM companies are integrating advanced ADS (Advanced Driver-Assistance System) technologies into new and upcoming automobiles for general consumer use and application. These vehicles may be autonomous or semi-autonomous. Some embodiments disclosed in this document include a 3rd party system that initiates and/or engages an automated driving system of the vehicle and subsequently monitor the operation as an autonomous safety rider system. For example, the autonomous safety rider system may be idle or disengaged and/or aware of the position, velocity, and/or general health of the vehicle's automated driving system. In the event the vehicle's automated driving system exceeds any defined parameter(s) or bound(s) of operation, the 3rd party monitoring system may re-engage and take control of the vehicle either by physical actuation or drive-by-wire (e.g., over CAN).

Generally, the term "safety rider" implies a human interaction or involvement to ensure proper operation of an autonomous system and may be generally used for autonomous vehicle testing from SAE autonomous levels 0-4 (but can be used in level 5 to control the vehicle if there are interface mechanisms such as steering, braking or an eStop mode). As vehicle manufacturers (e.g., OEM and tier 1, 2, etc.) automate aspects of vehicle testing, a 3rd party automated system can function as the safety rider when testing the integrated vehicle's automated driving system. The 3rd party automated system may provide the ability to ensure the vehicle's automated driving system is operating within prescribed parameters and/or bounds and/or remain idle and non-intrusive during the time the vehicle's automated driving system is engaged. Often 3rd party automated driving applications expect to control the vehicle when activated. With an autonomous safety rider system, for example, vehicle manufacturers can eliminate human involvement when testing the ADS capabilities.

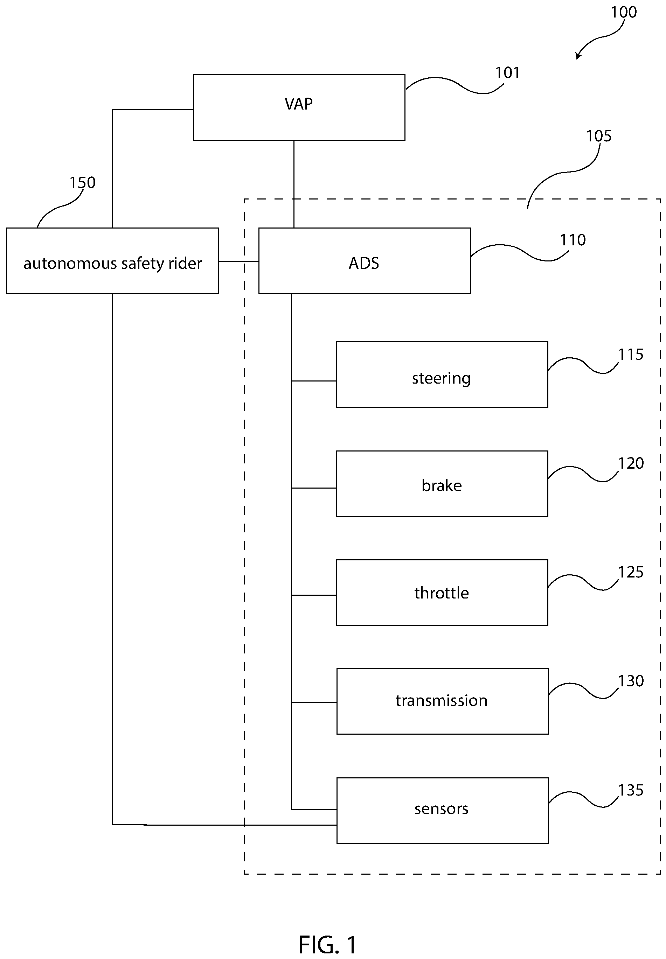

FIG. 1 is a block diagram of an automated autonomous vehicle test system 100 according to some embodiments. For example, an autonomous vehicle 105 may include an automated driving system (ADS) 110 that may be in communication with a vehicle automation platform (VAP) 105 such as, for example, through a wireless network. For example, the VAP may comprise MOBIUS^{®} or a similar system. The ADS 110 can control the autonomous vehicle's steering 115, brake 120, throttle 125, or transmission 130 systems. For example, the ADS 110 be in communication with any number of vehicle sensors 135 such as, for example, a GPS sensor, a speedometer, lidar, radar, camera, orientation, direction, etc. The ADS 110, for example, may include all or some of the components of computational system 600. The VAP 101, for example, may include all or some of the components of computational system 600.

The VAP 101, for example, may modify a user created test plan. For example, a specific vehicle may have unique or specific acceleration rates, deceleration rats, turning radii, etc. that may be updated or modified by the VAP 101. For example, a modified test plan may include trajectory data for a single or specific autonomous vehicle along a path(s).

The ADS 110, for example, can create a path segment from the test plan. The path segment may describe the path that the autonomous vehicle 105 will follow over time. The ADS 110 may compare the position, velocity, or heading of the autonomous vehicle 105 with the position, velocity, or heading specified in the test plan for past time intervals or for future time intervals. If the autonomous vehicle 105 is out of position or predicted to be out of position (within predetermined tolerances or test plan provided tolerances), the ADS 110 may adjust the speed or heading of the autonomous vehicle 105 by sending commands to the steering 115, brake 120, throttle 125, or transmission 130 subsystems, etc. For example, if the autonomous vehicle 105 is going to slow or is behind on its position, the ADS 110 can send a signal to the throttle 125 to apply more gas to the engine (or electricity to the motor) to speed up the autonomous vehicle 105. As another example, if the autonomous vehicle 105 is moving in an incorrect heading, then the ADS 110 can send a command to the steering 115 to change the direction the autonomous vehicle 105 is heading.

A test plan, for example, can be user generated by a user and supplied to the VAP 101. For example, the test plan data can be input into a spreadsheet. As another example, the test plan can be created graphically within software (e.g., at the VAP 101) that shows the position of each autonomous vehicle 105 over time.

The VAP 101, for example, can translate the test plan into data that can be recognized or executed by the ADS 110. The VAP 101 may communicate the translated test plan to the ADS 110 over a wireless network (e.g., WIFI network, Bluetooth network, radio network, Rajent network, 3G network, 4G network, 5G network, etc.).

The ADS 110, for example, may send autonomous vehicle 105 sensor data to the VAP 101 such as, for example, speed, position, heading, etc.

The autonomous vehicle 105, for example, may include an actuation kit that can be used to drive the steering, brake, throttle, or transmission of the autonomous vehicle 105.

For example, the autonomous vehicle 105 may include drive by wire functionality. Drive by wire functionality may allow the ADS 110 (or the autonomous safety rider system 150) to control the brake, throttle, steering, and/or transmission via electromechanical actuators. The ADS 110 (or the autonomous safety rider system 150), for example, may communicate with a gateway that can control or communicate commands to the steering 115, brake 120, throttle 125, or transmission 130.

The autonomous safety rider system 150 can be a control system that may be located within an autonomous vehicle 105 and/or in communication with the ADS 110. In the claimed invention, the autonomous safety rider system 150 is separate and distinct system from the ADS 110 and/or the VAP 101. As another example not forming part of the claimed invention, the autonomous safety rider system 150 can be integrated within the ADS 110 or the VAP 101. The autonomous safety rider system 150, for example, can communicate with various components of autonomous vehicle 105 via the ADS 110 or can communicate directly with the various components of the autonomous vehicle 105.

The autonomous safety rider system 150, for example, may receive path data, map data, safety parameters (e.g., speed, separation data, etc.), etc. from the VAP 101.

The autonomous safety rider system 150, for example, can receive data from the sensors 135 such as, for example, speed data, geolocation data (e.g., GPS data), orientation data, video data, image data, etc. If the autonomous safety rider system 150 determines the autonomous vehicle 105 is operating outside the safety parameters, the autonomous safety rider system 150 may operate the autonomous vehicle 105 to ensure the autonomous safety rider system 150 is within safety parameters and/or bring the autonomous vehicle 105 to a safe stop.

The autonomous safety rider system 150, for example, may communicate directly with the ADS 110 with instructions to change the steering 115, engage the brakes 120, adjust the throttle 125, and/or change the transmission 130. The autonomous safety rider system 150, for example, may include a processor or controller such as, for example, computational system 600.

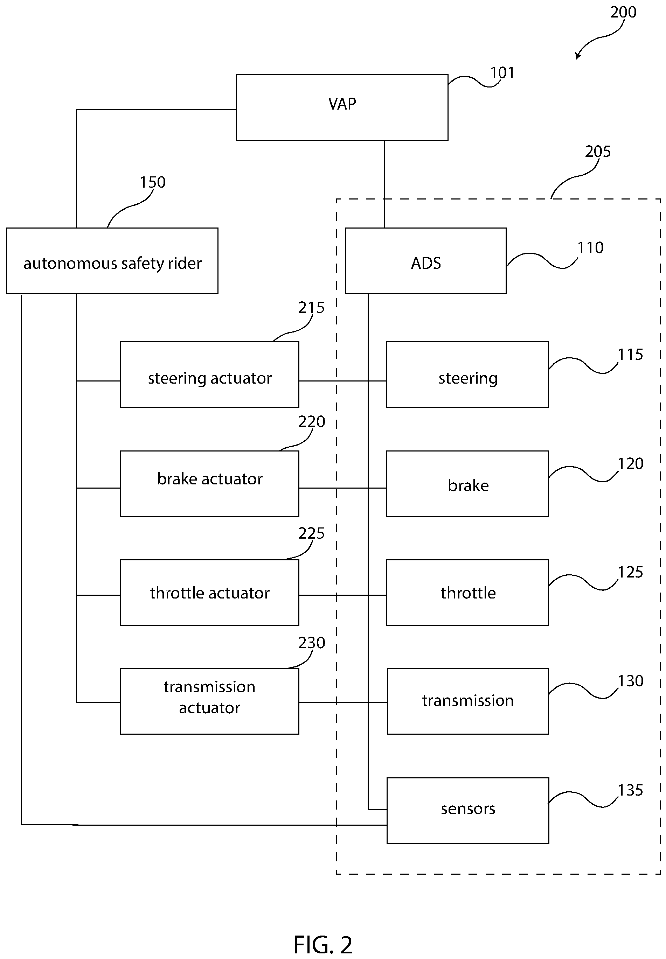

FIG. 2 is an automated autonomous vehicle test system 200 where the autonomous safety rider system 150 communicates with a steering actuator 215 to change the steering 115, a brake actuator 220 to engage the brakes 120, a throttle actuator 225 to adjust the throttle 125, and/or a transmission actuator 230 to change the transmission 130.

The steering actuator 215, for example, may include a physical device placed in the autonomous vehicle 205 that may be engaged with the steering wheel of steering 115. Based on instructions from the autonomous safety rider system 150, for example, the steering actuator 215 can steer the autonomous vehicle 205.

The brake actuator 220, for example, may include a physical device place in the autonomous vehicle 205 that may be engaged with the brake pedal of the brake 120. Based on instructions from the autonomous safety rider system 150, for example, the brake actuator 220 can slow or stop the autonomous vehicle 205.

The throttle actuator 225, for example, may include a physical device place in the autonomous vehicle 205 that may be engaged with the gas pedal of the throttle 125. Based on instructions from the autonomous safety rider system 150, for example, the throttle actuator 225 can slow down or speed up the autonomous vehicle 205.

The transmission actuator 230, for example, may include a physical device place in the autonomous vehicle 205 that may be engaged with the transmission 130. Based on instructions from the autonomous safety rider system 150, for example, the transmission actuator 230 can change gears in the transmission 130.

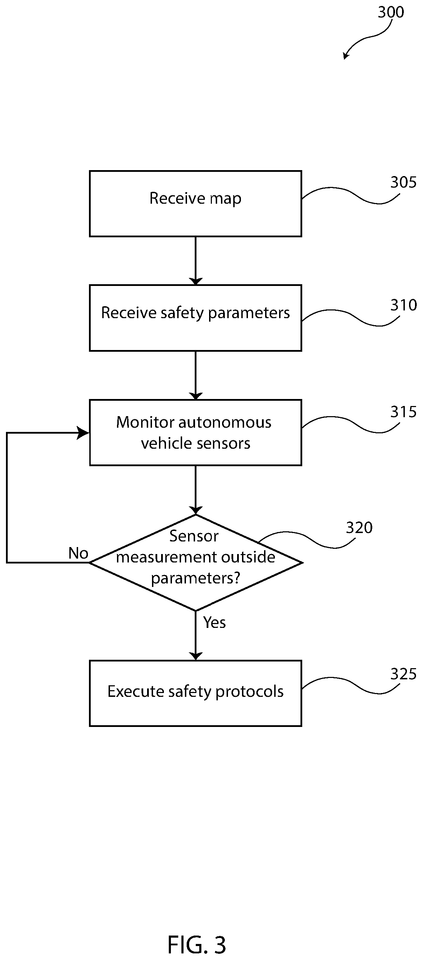

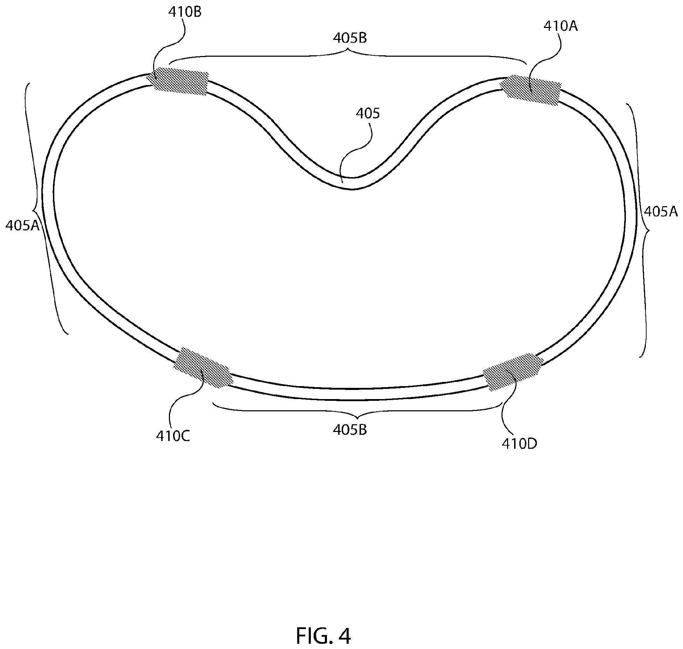

FIG. 3 is flowchart representing a process 300 for using an autonomous safety rider system according to some embodiments. Various additional blocks may be included in the process 300. Some blocks of process 300 may be removed or replaced. Additional blocks may also be used at any part of the process 300. The process 300 may execute, for example, at the autonomous safety rider system 150. FIG. 4 is an example map with a path.

At block 305, the autonomous safety rider system 150 may receive a map. The map may be received, for example, from the VAP 101. A map may be created to identify where the autonomous vehicle (e.g., autonomous vehicle 105 or autonomous vehicle 205) can drive and operate. The map, for example, may include a plurality of paths that define the course the vehicle is expected to take from one point to the another. The map, for example, may include areas where the autonomous vehicle is not allowed and areas where the autonomous vehicle is allowed. The map, for example, may include speed limits associates with specific portions of a path or the map.

The autonomous safety rider system 150, for example, may turn off actuation of any of the steering actuator 215, the brake actuator 220, the throttle actuator 225, and/or the transmission actuator 230. The autonomous safety rider system 150, for example, may stop sending signals to any of the steering 115, the brake 120, the throttle 125, and/or the transmission 130.

At block 310, the autonomous safety rider system 150 may receive safety parameters. The safety parameters, for example, may be sent from the VAP 101 to the autonomous safety rider system 150. As another example, the safety parameters may be entered by a user via a third party computer system such as, for example, a third party computer connected via a wireless signal.

The safety parameters, for example may include a speed limit, a safety distance (e.g., between the autonomous vehicle and other objects around the autonomous vehicle), etc. As another example, the safety parameters may include driving within lines on the road (or path) as sensed by the sensors 135 and/or within a geofenced boundary. The safety parameters, for example, may vary depending on the location of the autonomous vehicle. For example, the speed limit may be greater at a first geolocation and lower at a second geolocation.

For example, the safety parameters may vary depending on the speed of the autonomous vehicle. For example, the front safety distance may be lower at lower speeds and greater at higher speeds.

The autonomous vehicle may be driven, for example, along the path by the ADS 110.

At block 315 the autonomous safety rider system 150 may monitor the various sensors of the autonomous vehicle and/or sensors coupled with the autonomous safety rider system 150 (e.g., geolocation sensors).

At block 320, the autonomous safety rider system 150 may compare the sensor data with the safety parameters. In the event the sensor data is within the safety parameters, the process 300 returns to block 315. In the event the sensor data is within the safety parameters, the process 300 proceeds to block 325.

At block 325, safety protocols can be executed by the autonomous safety rider system 150. The protocols, for example, can depend on the type or magnitude of the sensor data. As another example, the safety protocols can depend on the type of autonomous vehicle. As another example, the safety protocols can depend on whether the autonomous safety rider system 150 is coupled with the ADS 110 as shown in FIG. 1 or whether the autonomous safety rider system 150 is coupled with various actuators. A few examples of process 300 follow.

The safety protocols may include returning to path within acceptable or previously defined limits of "off-path" deviation or bring the vehicle to a safe stop with either a controlled stop, soft eStop, or hard eStop.

In a first example, the VAP (or MOBIUS^{®}) can create a test plan for a first autonomous vehicle with a plurality of autonomous vehicles. The test plan may include paths for the first autonomous vehicle and/or each of the plurality of autonomous vehicles, speeds for each of the plurality autonomous vehicles, choreography of one or more of the autonomous vehicles, etc. The test plan may be communicated to the various autonomous vehicles. At block 305 the test plan with paths can be communicated to the autonomous safety rider system 150.

The test plan may include safety parameters for each of the autonomous vehicles. The safety parameters may include a safety distance and a safety speed at a specific portion of one of the paths of the test plan. The test plan may also include safety protocols such as, for example, if the speed exceeds a speed value, then apply the brakes. As another example, if the distance between an autonomous vehicle and a vehicle in front of the autonomous vehicle is less than a safety distance, then the safety protocol may require that the brakes are applied. At block 310, the test plan may be communicated to the autonomous safety rider system 150.

At block 315, the autonomous safety rider system 150 may monitor the speed of the first autonomous vehicle of the plurality of autonomous vehicles. At block 320, if the speed of the first autonomous vehicle exceeds the safety speed, then the safety protocols can be engaged at block 325. The safety protocols may include stopping the first autonomous vehicle or slowing the first autonomous vehicle. For example, applying the safety protocols may include sending instructions from the autonomous safety rider system 150 to the ADS 110. For example, applying the safety protocols may include sending instructions to the steering actuator 215, the brake actuator 220, the throttle actuator 225, and/or the transmission actuator 230.

The safety protocols, for example, may also include instruction to apply safety protocols to other autonomous vehicles of the plurality of autonomous vehicles (e.g., swarming vehicles). These safety protocols may include moving away from the first autonomous vehicle by accelerating, turning, slowing, etc. such as, for example, based on the disposition of a given autonomous vehicle relative to the first autonomous vehicle.

The VAP 101, for example, may create maps that define or identify where an autonomous vehicle can drive and/or operate. The VAP 101 may define paths within the map that define the path the vehicle is expected to take. Along the path, for example, the user can define with path actions where the autonomous safety rider system 150 is expected to engage the autonomous vehicle. The autonomous safety rider system 150, for example, can engage the autonomous vehicle's ADS 110, which may include cruise control.

The autonomous safety rider system 150, for example, may be placed into a monitoring mode and/or disengages or "turn's off" the actuation units if the autonomous vehicle is being driven with physical actuation or stops sending signals (e.g., over a CAN interface) to the vehicle if being driven "by-wire". While autonomous safety rider system 150 is in monitoring mode, the autonomous safety rider system 150 may gather data from various sensors (e.g., GPS), the autonomous vehicle, and/or the VAP to ensure the prescribed "off-path" or velocity deviations (e.g., safety protocols) are being kept within defined bounds set within VAP 101.

If the autonomous vehicle exceeds the thresholds (e.g., safety protocols) defined within VAP, the autonomous safety rider system 150 may engage and take control from the ADS by either: 1) physically moving the actuation (e.g., steering, brake, throttle, transmission, etc.) that will turn off the host's ADS or 2) Sending an electronic signal to the autonomous vehicle's ADS to (e.g., over CAN) to disable the autonomous vehicles ADS or engage the break, throttle, steering or transmission. Depending on the defined actions for when the ASR takes control (e.g., safety protocols), for example, the autonomous vehicle can be returned to the path within the acceptable limits of "off-path" deviation or bring the vehicle to a safe stop with either a controlled stop, soft eStop, or hard eStop. If the autonomous vehicle's ADS successfully executes within the bounds of operation set within the VAP, the autonomous vehicle should come to a path action on the VAP map to disengage the host's ADS and disengage ASR. At this point, the vehicle is operating within the control of the ASR.

During operation, for example, the autonomous vehicle's ADS can be activated and/or deactivated (and activating and/or disactivating ASR) multiple times depending on the testing needs of the vehicle manufacturer.

FIG. 4 is an illustration of an autonomous vehicle path 405 according to some embodiments. In this example, there are portions along the path 405 where the autonomous safety rider system may be engaged 405B. The other portions of the path may be where the autonomous safety rider system may be disengaged.

A user, for example, may identify portions along the path 405 where the autonomous vehicle is set to change from being operated autonomously and where the autonomous vehicle is operated by the VAP. For example, the user may indicate that at position 410A and position 410C the autonomous vehicle transitions from being operated by the VAP to being driven autonomously with the autonomous safety rider system engaged. The user may also indicate that at position 410B and position 410D the autonomous vehicle transitions from being operated autonomously with the autonomous safety rider system engaged to the being driven by the VAP.

Along the path 405B, for example, the autonomous vehicle can be operated in a test environment to see how the autonomous vehicle behaves in certain situations and/or scenarios under test. Along path 405B the autonomous safety rider system 150 may be engaged, may monitor the autonomous vehicle, and/or may control the autonomous vehicle if the autonomous vehicle operates outside the safety parameters.

In this example, the VAP may plan the path 405. The VAP, for example, may also plan positions 410 where the autonomous vehicle transitions into and out of autonomous safety rider system mode. For example, the autonomous vehicle can drive along the path 405 under control of the VAP along path 405A and autonomously along path 405B. As the vehicle drives along path 405B, the autonomous safety rider system can ensure the autonomous vehicle operates autonomously but within safety parameters.

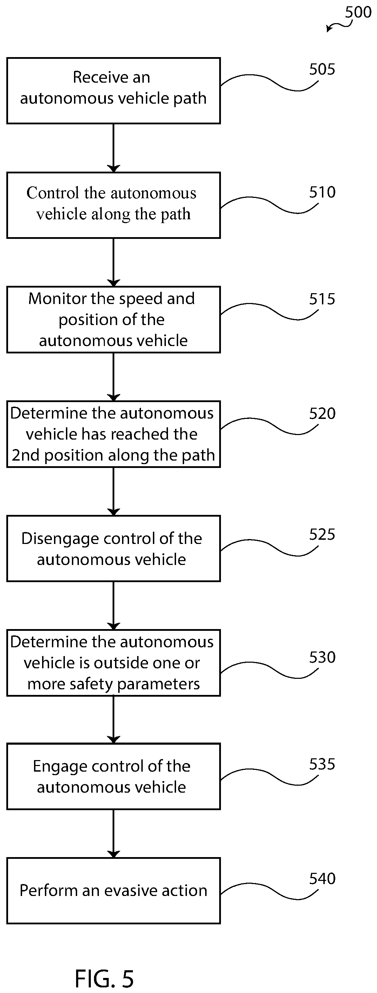

FIG. 5 is flowchart representing a process for using an autonomous safety rider system according (e.g., autonomous safety rider system 150) to some embodiments. Various additional blocks may be included in the process 500. Some blocks of process 500 may be removed or replaced. Additional blocks may also be used at any part of the process 500. The process 500 may execute, for example, at the autonomous safety rider system 150.

At block 505 the autonomous safety rider system may receive a path for the autonomous vehicle. The path, for example, may be received from the VAP 101. The path, for example, may be part of a map. FIG. 4 is an example map with a path.

A map may be created to identify where the autonomous vehicle (e.g., autonomous vehicle 105 or autonomous vehicle 205) can drive and operate. The map, for example, may include a plurality of paths that define the course the vehicle is expected to take from one point to the another. The map, for example, may include areas where the autonomous vehicle is not allowed and areas where the autonomous vehicle is allowed. The map, for example, may include speed limits associates with specific portions of a path or the map.

The path may identify portions of the path (e.g., a first portion) where the autonomous vehicle should be controlled by the autonomous safety rider system (e.g., path portion 405A) and/or identify portions of the path (e.g., a second portion) where the autonomous vehicle should not be controlled by the autonomous safety rider system (e.g., path portion 405B). In the second portion of the path the autonomous safety rider system may monitor the speed and position of the autonomous vehicle.

At block 510 the autonomous safety rider system may control operation of the autonomous vehicle along the along the path. For example, the autonomous safety rider system may control the throttle, brake, and/or steering to ensure the autonomous vehicle proceed along the path as defined.

At block 515 the autonomous safety rider system monitors the speed and position of the autonomous vehicle as it is controlled by the autonomous vehicle's automated driving system.

At block 520 the autonomous safety rider system determines that the autonomous vehicle has reached the second position along the path or is on the second position along the path.

At block 525 the autonomous safety rider system disengages control of the autonomous vehicle by the autonomous safety rider system. At this point, the ADS may take over control of the autonomous vehicle. The autonomous safety rider system, for example, may send a signal to the ADS to instruct the ADS to take over control of the autonomous vehicle and/or wait for confirmation that control is being handled by the ADS. As another example, the ADS may send a signal to the autonomous safety rider system that the ADS is taking over control of the autonomous vehicle and/or the autonomous safety rider system may send a confirmation that control is being handled by the ADS.

At block 530 the autonomous safety rider system may determine that the autonomous vehicle is outside one or more safety parameters based on one more sensor readings such as, for example, GPS sensors, speedometer, etc.

At block 535 the autonomous safety rider system may engage control of the autonomous vehicle by the autonomous safety rider system in response to the autonomous safety rider system determining that the autonomous vehicle is outside one or more safety parameters.

At block 540 the autonomous safety rider system may perform an evasive action such as, for example, engaging the brakes and/or engaging the steering.

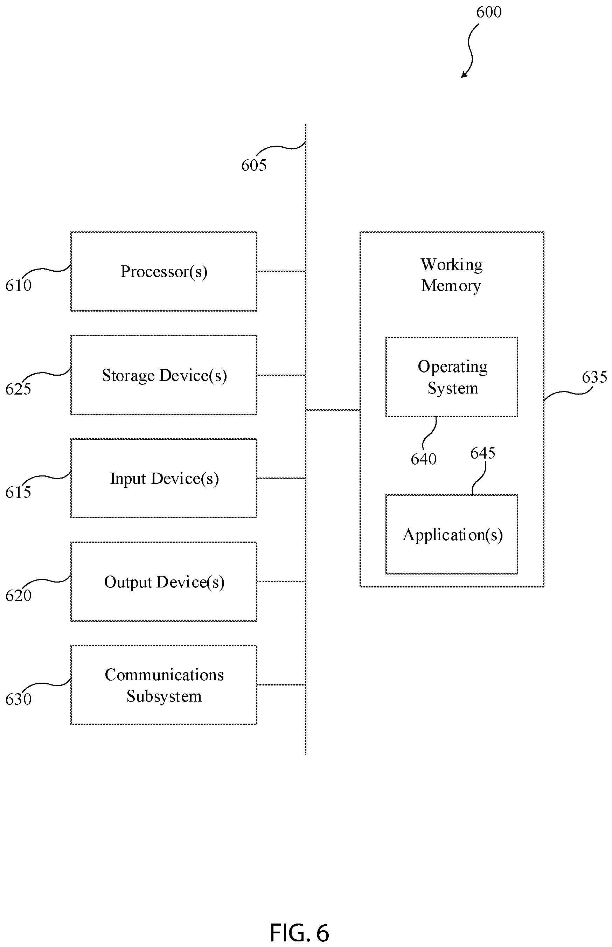

The computational system 600, shown in FIG. 6 can be used to perform any of the embodiments of the invention. For example, computational system 600 can be used to execute any or part of the process 300. As another example, computational system 600 can be used perform any calculation, identification and/or determination described here. Computational system 600 includes hardware elements that can be electrically coupled via a bus 605 (or may otherwise be in communication, as appropriate). The hardware elements can include one or more processors 610, including without limitation one or more general-purpose processors and/or one or more special-purpose processors (such as digital signal processing chips, graphics acceleration chips, and/or the like); one or more input devices 615, which can include without limitation a mouse, a keyboard and/or the like; and one or more output devices 620, which can include without limitation a display device, a printer and/or the like.

The computational system 600 may further include (and/or be in communication with) one or more storage devices 625, which can include, without limitation, local and/or network accessible storage and/or can include, without limitation, a disk drive, a drive array, an optical storage device, a solid-state storage device, such as a random access memory ("RAM") and/or a read-only memory ("ROM"), which can be programmable, flash-updateable and/or the like. The computational system 600 might also include a communications subsystem 630, which can include without limitation a modem, a network card (wireless or wired), an infrared communication device, a wireless communication device and/or chipset (such as a Bluetooth device, an 802.6 device, a Wi-Fi device, a WiMax device, cellular communication facilities, etc.), and/or the like. The communications subsystem 630 may permit data to be exchanged with a network (such as the network described below, to name one example), and/or any other devices described in this document. In many embodiments, the computational system 600 will further include a working memory 635, which can include a RAM or ROM device, as described above.

The computational system 600 also can include software elements, shown as being currently located within the working memory 635, including an operating system 640 and/or other code, such as one or more application programs 645, which may include computer programs of the invention, and/or may be designed to implement methods of the invention and/or configure systems of the invention, as described herein. For example, one or more procedures described with respect to the method(s) discussed above might be implemented as code and/or instructions executable by a computer (and/or a processor within a computer). A set of these instructions and/or codes might be stored on a computer-readable storage medium, such as the storage device(s) 625 described above.

In some cases, the storage medium might be incorporated within the computational system 600 or in communication with the computational system 600. In other embodiments, the storage medium might be separate from a computational system 600 (e.g., a removable medium, such as a compact disc, etc.), and/or provided in an installation package, such that the storage medium can be used to program a general-purpose computer with the instructions/code stored thereon. These instructions might take the form of executable code, which is executable by the computational system 600 and/or might take the form of source and/or installable code, which, upon compilation and/or installation on the computational system 600 (e.g., using any of a variety of generally available compilers, installation programs, compression/decompression utilities, etc.) then takes the form of executable code.

The term "autonomous vehicle" may refer to a vehicle that is autonomous or semi-autonomous.

Unless otherwise specified, the term "substantially" means within 5% or 10% of the value referred to or within manufacturing tolerances. Unless otherwise specified, the term "about" means within 5% or 10% of the value referred to or within manufacturing tolerances.

The conjunction "or" is inclusive.

The terms "first", "second", "third", etc. are used to distinguish respective elements and are not used to denote a particular order of those elements unless otherwise specified or order is explicitly described or required.

Numerous specific details are set forth to provide a thorough understanding of the claimed subject matter. However, those skilled in the art will understand that the claimed subject matter may be practiced without these specific details. In other instances, methods, apparatuses or systems that would be known by one of ordinary skill have not been described in detail so as not to obscure claimed subject matter.

Some portions are presented in terms of algorithms or symbolic representations of operations on data bits or binary digital signals stored within a computing system memory, such as a computer memory. These algorithmic descriptions or representations are examples of techniques used by those of ordinary skill in the data processing arts to convey the substance of their work to others skilled in the art. An algorithm is a self-consistent sequence of operations or similar processing leading to a desired result. In this context, operations or processing involves physical manipulation of physical quantities. Typically, although not necessarily, such quantities may take the form of electrical or magnetic signals capable of being stored, transferred, combined, compared or otherwise manipulated. It has proven convenient at times, principally for reasons of common usage, to refer to such signals as bits, data, values, elements, symbols, characters, terms, numbers, numerals or the like. It should be understood, however, that all of these and similar terms are to be associated with appropriate physical quantities and are merely convenient labels. Unless specifically stated otherwise, it is appreciated that throughout this specification discussions utilizing terms such as "processing," "computing," "calculating," "determining," and "identifying" or the like refer to actions or processes of a computing device, such as one or more computers or a similar electronic computing device or devices, that manipulate or transform data represented as physical electronic or magnetic quantities within memories, registers, or other information storage devices, transmission devices, or display devices of the computing platform.

The system or systems discussed are not limited to any particular hardware architecture or configuration. A computing device can include any suitable arrangement of components that provides a result conditioned on one or more inputs. Suitable computing devices include multipurpose microprocessor-based computer systems accessing stored software that programs or configures the computing system from a general-purpose computing apparatus to a specialized computing apparatus implementing one or more embodiments of the present subject matter. Any suitable programming, scripting, or other type of language or combinations of languages may be used to implement the teachings contained in software to be used in programming or configuring a computing device.

Embodiments of the methods disclosed may be performed in the operation of such computing devices. The order of the blocks presented in the examples above can be varied-for example, blocks can be re-ordered, combined, and/or broken into sub-blocks. Certain blocks or processes can be performed in parallel.

The use of "adapted to" or "configured to" is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or values beyond those recited. Headings, lists, and numbering included are for ease of explanation only and are not meant to be limiting.

While the present subject matter has been described in detail with respect to specific embodiments thereof, it will be appreciated that those skilled in the art, upon attaining an understanding of the foregoing, may readily produce alterations to, variations of, and equivalents to such embodiments. Accordingly, it should be understood that the present disclosure has been presented for purposes of example rather than limitation, and does not preclude inclusion of such modifications, variations and/or additions to the present subject matter as would be readily apparent to one of ordinary skill in the art.

## Claims

1. A method for an autonomous vehicle (105), the method comprising:
receiving, at an autonomous safety rider system (150) of the autonomous vehicle, a map from a remote vehicle automation platform (101), the map providing one or more paths that define a course the autonomous vehicle is expected to take from one point to another point;
receiving, at the autonomous safety rider system of the autonomous vehicle, safety parameters from the remote vehicle automation platform (101) for one or more positions along the one or more paths within the map;
while the autonomous vehicle is being driven along the one or more paths by an automated driving system (110) of the autonomous vehicle, monitoring vehicle sensors (135) via the autonomous safety rider system;
determining by the autonomous safety rider system from data received from monitoring the vehicle sensors whether the autonomous vehicle is operating outside the safety parameters; and
in the event the autonomous vehicle is operating outside the safety parameters for the one or more positions along the one or more paths, sending via the autonomous safety rider system an operational signal to engage brakes, turn a steering, and/or engage a throttle of the autonomous vehicle,
wherein the autonomous safety rider system is separate from the automated driving system.

2. The method according to claim **1,** further comprising sending a signal or message from the autonomous safety rider system to the automated driving system that the autonomous safety rider system has taken over control of the autonomous vehicle.

3. The method according to claim **1,** further comprising disabling control of the autonomous vehicle by the automated driving system.

4. The method according to claim **1,** wherein the sensors are sensors on the autonomous vehicle.

5. The method according to claim 1, wherein the autonomous vehicle comprises a semi-autonomous vehicle.

6. The method according to claim **1,** wherein the operational signal is transmitted to the autonomous vehicle via autonomous vehicle's CAN system.

## Patentansprüche

1. Verfahren für ein autonomes Fahrzeug (105), wobei das Verfahren umfasst:
Empfangen, an einem autonomen Sicherheitsreitersystem (150) des autonomen Fahrzeugs, einer Karte von einer Fernfahrzeugautomatisierungsplattform (101), wobei die Karte einen oder mehrere Pfade bereitstellt, die eine Route definieren, die das autonome Fahrzeug voraussichtlich von einem Punkt zu einem anderen Punkt nehmen wird;
Empfangen, an dem autonomen Sicherheitsreitersystem des autonomen Fahrzeugs, von Sicherheitsparametern von der Fernfahrzeugautomatisierungsplattform (101) für eine oder mehrere Positionen entlang des einen oder der mehreren Pfade innerhalb der Karte;
während das autonome Fahrzeug durch ein automatisiertes Fahrsystem (110) des autonomen Fahrzeugs entlang des einen oder der mehreren Pfade gefahren wird, Überwachen von Fahrzeugsensoren (135) über das autonome Sicherheitsreitersystem;
Ermitteln durch das autonome Sicherheitsreitersystem anhand von Daten, die durch das Überwachen der Fahrzeugsensoren empfangen wurden, ob das autonome Fahrzeug außerhalb der Sicherheitsparameter betrieben wird; und
für den Fall, dass das autonome Fahrzeug außerhalb der Sicherheitsparameter für die eine oder mehreren Positionen entlang des einen oder der mehreren Pfade betrieben wird, Senden eines Betriebssignals über das autonome Sicherheitsreitersystem zum Betätigen der Bremsen, Drehen der Lenkung und/oder Betätigen der Drossel des autonomen Fahrzeugs,
wobei das autonome Sicherheitsreitersystem von dem automatisierten Fahrsystem getrennt ist.

2. Verfahren nach Anspruch 1, ferner umfassend das Senden eines Signals oder einer Nachricht von dem autonomen Sicherheitsreitersystem an das automatisierte Fahrsystem, dass das autonome Sicherheitsreitersystem die Steuerung des autonomen Fahrzeugs übernommen hat.

3. Verfahren nach Anspruch 1, ferner umfassend das Deaktivieren der Steuerung des autonomen Fahrzeugs durch das automatisierte Fahrsystem.

4. Verfahren nach Anspruch 1, wobei die Sensoren Sensoren an dem autonomen Fahrzeug sind.

5. Verfahren nach Anspruch 1, wobei das autonome Fahrzeug ein teilautonomes Fahrzeug umfasst.

6. Verfahren nach Anspruch 1, wobei das Betriebssignal über das CAN-System des autonomen Fahrzeugs an das autonome Fahrzeug übertragen wird.

## Revendications

1. Procédé pour un véhicule (105) autonome, le procédé comprenant :
la réception, sur un système (150) de conducteur de sécurité autonome du véhicule autonome, d'une carte provenant d'une plateforme (101) d'automatisation de véhicule à distance, la carte fournissant un ou plusieurs chemins qui définissent un parcours que le véhicule autonome devrait suivre d'un point à un autre ;
la réception, sur le système de conducteur de sécurité autonome du véhicule autonome, de paramètres de sécurité provenant de la plateforme (101) d'automatisation de véhicule à distance pour une ou plusieurs positions le long d'un ou plusieurs chemins dans la carte ;
pendant que le véhicule autonome est conduit le long d'un ou plusieurs chemins par un système (110) de conduite automatisé du véhicule autonome, la surveillance de capteurs (135) de véhicule via le système de conducteur de sécurité autonome ;
la détermination par le système de conducteur de sécurité autonome, à partir des données reçues des capteurs de véhicule, si le véhicule autonome fonctionne en dehors des paramètres de sécurité ; et
dans le cas où le véhicule autonome fonctionne en dehors des paramètres de sécurité pour les une ou plusieurs positions le long des un ou plusieurs chemins, l'envoi via le système de conducteur de sécurité autonome d'un signal opérationnel pour actionner les freins, tourner le volant et/ou accélérer le véhicule autonome,
dans lequel le système de conducteur de sécurité autonome est distinct du système de conduite automatisé.

2. Procédé selon la revendication 1, comprenant en outre l'envoi d'un signal ou d'un message du système de conducteur de sécurité autonome au système de conduite automatisé indiquant que le système de conducteur de sécurité autonome a pris le contrôle du véhicule autonome.

3. Procédé selon la revendication 1, comprenant en outre la désactivation du contrôle du véhicule autonome par le système de conduite automatisé.

4. Procédé selon la revendication 1, dans lequel les capteurs sont des capteurs situés sur le véhicule autonome.

5. Procédé selon la revendication 1, dans lequel le véhicule autonome comprend un véhicule semi-autonome.

6. Procédé selon la revendication 1, dans lequel le signal opérationnel est transmis au véhicule autonome via le système CAN du véhicule autonome.
